# FASCICULE DE BREVET EUROPEEN

(11) **EP 0 973 420 B1**
(45) Date de publication et mention de la délivrance du brevet: **02.04.2003**
(21) Numéro de dépôt: 98913862.3
(22) Date de dépôt: 09.03.1998
(51) Int. Cl.: A44C 21/00, G06K 19/077, G07F 1/06, B29C 45/14

(54) **JETON A PUCE ELECTRONIQUE**
MARKE MIT ELEKTRONISCHEN CHIP
TOKEN WITH ELECTRONIC CHIP

(30) Priorité: 10.03.1997 FR 9702784; 10.03.1997 FR 9702783
(43) Date de publication de la demande: 26.01.2000
(73) Titulaire: ETABLISSEMENTS BOURGOGNE ET GRASSET, 21420 Savigny-les-Beaune (FR)
(72) Inventeur: CHAPET, Pierre, F-21200 Beaune (FR); GASSIES, Christophe, F-21420 Echevronne (FR); BOIRON, Dominique, F-21200 Beaune (FR); CHARLIER, Gérard, F-75006 Paris (FR)
(74) Mandataire: Poidatz, Emmanuel
(86) Numéro de dépôt international: FR9800462
(87) Numéro de publication internationale: WO98039989

(56) Documents cités:
- EP-A- 0 412 545
- EP-A- 0 646 893
- EP-A- 0 669 597
- EP-A- 0 694 872
- FR-A- 2 727 542
- US-A- 5 399 847

## Description

### DOMAINE TECHNIQUE

La présente invention concerne des jetons de forme générale de disque, ou des dispositifs analogues de forme plate, intégrant une puce électronique. L'invention trouve ses applications, entre autres, dans l'identification "sans contact" des personnes et des objets aussi appelée l'étiquetage électronique et dans l'authentification et l'identification des jetons de jeu également appelés jetons de casino. Par jeton de jeu on entend tout jeton utilisable en salle de jeux et représentant une valeur nominale prédéterminée ou non.

### TECHNIQUE ANTERIEURE

La demande de brevet EP-A-0694872 au nom du Demandeur décrit une puce électronique intégrée dans le corps du jeton réalisé en matière plastique rigide et robuste et formant ainsi une coque de protection pour la puce. La puce électronique comporte un circuit électronique à mémoire portant des informations d'identification et/ou de codage concernant la personne ou l'objet associé au jeton (étiquette électronique) ou le jeton lui-même (jeton de jeu ou jeton de paiement), le circuit électronique étant en général associé à un émetteur-récepteur à antenne périphérique adapté pour être alimenté par couplage inductif.

La demande de brevet EP-A-0796049 basée sur la demande PCT/FR 9601558 publiée le 17 avril 1997 sous le numéro WO 97/13424 décrit un jeton selon le préambule de la revendication 1.

### EXPOSE DE L'INVENTION

L'invention a pour but de proposer un jeton de structure relativement simple, compacte et robuste et de fabrication facilitée pour permettre, le cas échéant, une certaine automatisation de fabrication.

A cette fin, l'invention propose un jeton en forme générale de disque, ou dispositif analogue de forme plate, comportant deux demi-disques solidarisés l'un à l'autre, les deux demi-disques en matière plastique étant espacés par l'intermédiaire d'une projection axiale d'écartement prévue sur la face interne d'un des demi-disques ou demi-disque support de façon à définir entre les deux demi-disques une zone annulaire périphérique débouchant sur la tranche du jeton, et un joint de solidarisation en matière plastique déposé par injection dans ladite zone annulaire périphérique, ladite projection axiale d'écartement, de hauteur sensiblement égale à celle de ladite zone annulaire périphérique, se présentant sous la forme d'une couronne réceptacle définissant une zone centrale interne dans le jeton pour servir de réceptacle à un insert se présentant sous la forme d'un dispositif électronique comportant un circuit électronique incorporant une mémoire portant des informations d'identification ou de codage et un émetteur-récepteur à antenne périphérique, caractérisé en ce que l'autre demi-disque ou demi-disque couvercle comporte une couronne de fermeture continue ou discontinue venant en appui sur la couronne réceptacle avec un recouvrement axial.

La structure du jeton selon l'invention à demi-disques dissymétriques autorise un grand nombre de points d'appui ou de contact entre les deux demi-disques et bien répartis circulairement et avec un recouvrement axial de des deux couronnes. Il en résulte un jeton compact et robuste dans lequel l'insert électronique est bien protégé sans pénalité de diamètre et/ou d'épaisseur pour le jeton. Cette structure de jeton permet un centrage axial aisé pour les deux demi-disques et par voie de conséquence un emboîtage facilité des deux demi-disques l'un par rapport à l'autre sur, autour ou à l'intérieur de la couronne réceptacle.

Selon un premier mode de réalisation du jeton selon l'invention, la couronne réceptacle comporte une zone circulaire plane surmontée d'une ceinture de saillies en position extérieure réparties circulairement et destinées à maintenir en place l'insert et à recevoir ladite couronne de fermeture.

Selon une première variante, le jeton comporte un insert se présentant avec son antenne sous la forme générale d'une pastille ou plaquette mince, la couronne de fermeture présentant un flanc externe venant en contact latéral sur lesdites saillies de la couronne réceptacle, ladite plaquette étant après montage dans le jeton maintenue axialement entre la couronne de fermeture et la zone circulaire plane de la couronne réceptacle. Avantageusement la plaquette présente une forme polygonale, de préférence carrée ou rectangulaire et la ceinture de saillies de la couronne réceptacle présente des découpes pour permettre aux sommets de ladite plaquette de se projeter dans la zone annulaire périphérique du jeton.

Selon une autre variante, au moins une des deux couronnes des demi-disques du jeton présente des créneaux ou des canaux traversants pour faire communiquer la zone annulaire périphérique avec la zone centrale interne et faciliter le remplissage de cette dernière par de la matière injectée lors de l'injection du joint.

Selon encore une variante le contour interne de la ceinture de saillies et le contour externe de la couronne de fermeture présentent des formes polygonales complémentaires, de préférence carrée ou rectangulaire.

Selon encore une autre variante le contour externe de la couronne de fermeture est circulaire et les sommets des saillies de la couronne réceptacle se projettent dans une gorge annulaire de faible profondeur réalisée dans le demi-disque couvercle.

Ce premier mode de réalisation est bien adapté à la fabrication de jetons de petite taille (par exemple d'étiquettes électroniques). De plus le jeton présente une structure très compacte et très robuste.

Selon un second mode de réalisation de l'invention la couronne réceptacle comporte une zone circulaire d'appui plane creusée axialement d'une gorge annulaire circulaire destinée à recevoir une couronne de fermeture circulaire à profil complémentaire à ladite gorge. Avantageusement la gorge, de profil à fond plat et à bords évasés, présente une profondeur sensiblement égale à la hauteur de la couronne réceptacle.

Selon un troisième mode de réalisation de l'invention la couronne réceptacle présente un profil externe conique complémentaire au profil interne conique de la couronne de fermeture, les deux couronnes présentant de plus des hauteurs sensiblement égales pour assurer un recouvrement axial entre les deux couronnes au moins égal à la hauteur de ladite zone annulaire périphérique.

Selon une variante de ces second et troisième modes de réalisation de l'invention, la face interne du demi-disque réceptacle porte au centre de la zone centrale interne un bossage en forme de C destiné à recevoir ledit circuit électronique et présentant une zone d'appui plane creusée d'une gorge en C destinée à recevoir une saillie correspondante en C réalisée sur la face interne du demi-disque couvercle. Avantageusement deux demi-disques sont collés au niveau de ladite gorge en C et de la saillie correspondante à la colle cyano-acrylate ou analogue et l'insert à circuit électronique est maintenu en position dans la zone centrale interne par de la colle époxy ou analogue.

Ces second et troisième modes de réalisation sont bien adaptés au montage de jetons à insert électronique non ou partiellement protégé. Dans la pratique il est possible d'utiliser et de déposer automatiquement les deux colles de types différents sans les mélanger, la colle époxy dans la zone centrale interne et la colle cyano-acrylate dans la gorge en C.

Quoique optionnelle, la présence de la charnière entre les demi-disques est intéressante à plusieurs points de vue lors de la fabrication du jeton. Elle permet l'obtention des deux demi-disques en une seule opération de moulage par injection; elle réalise l'indexation angulaire des deux demi-disques; elle facilite l'automatisation de la fermeture des demi-disques sur l'insert; enfin elle facilite le montage du jeton pour les jetons de petit diamètre (par exemple de l'ordre de 20 mm).

L'invention concerne également un procédé de fabrication d'un jeton selon les diverses structures présentées ci-avant comportant les opérations suivantes:
- moulage par injection des deux demi-disques séparés ou attachés par une charnière,
- mise en place de l'insert à circuit électronique avec collage éventuel et mise en place des deux demi-disques,
- fermeture des demi-disques,
- injection du joint,
- élimination éventuelle de la charnière par tournage de la périphérie du jeton.

D'autres buts, caractéristiques et avantages de la présente invention apparaîtront à la lecture de la description qui va suivre de divers modes de réalisation de l'invention donnés à titre d'exemples non limitatifs, en référence aux dessins ci-joints.

### DESCRIPTION SOMMAIRE DES DESSINS

- la figure 1 représente une vue de face (côté face interne) des deux demi-disques avec charnière d'un jeton selon un premier mode de réalisation de la présente invention;
- la figure 2 représente une vue agrandie en coupe diamétrale selon la ligne AA des deux demi-disques représentés à la figure 1 pré-assemblés avant injection du joint;
- la figure 3 représente une vue agrandie en coupe diamétrale selon la ligne AA du jeton terminé incorporant les demi-disques représentés aux figures 1 et 2;
- la figure 4 représente une vue de face (côté face interne) des deux demi-disques avec charnière d'un jeton selon un autre mode de réalisation de la présente invention;
- la figure 5 représente une vue agrandie en coupe diamétrale selon la ligne BB du jeton incorporant les demi-disques représentés à la figure 4 après injection du joint;
- la figure 6 représente une vue schématique des demi-disques représentés aux figures 4 et 5 (montrés en coupe diamétrale) illustrant l'automatisation de la fermeture du demi-disque couvercle (montré en 3 positions) sur le demi-disque support;
- les figures 7 et 8 représentent respectivement une vue de face (côté face interne) et une vue de dessous des deux demi-disques avec charnière d'un jeton selon une variante du jeton représenté aux figures 1 à 3 illustrant le premier mode de réalisation de la présente invention;
- la figure 9 représente une vue agrandie en coupe diamétrale selon la ligne A'A' des deux demi-disques représentés aux figures 7 et 8 pré-assemblés avant injection du joint;
- la figure 10 représente une vue agrandie en coupe diamétrale selon la ligne A'A' du jeton terminé incorporant les demi-disques représentés aux figures 7, 8 et 9;
- la figure 11 représente une vue agrandie en coupe diamétrale d'une première variante du jeton représenté à la figure 5 montrant les demi-disques après injection du joint; et
- la figure 12 représente une vue agrandie en coupe diamétrale d'une seconde variante du jeton représenté à la figure 5 montrant les demi-disques après injection du joint.

### MEILLEURS MODES DE REALISATION DE L'INVENTION

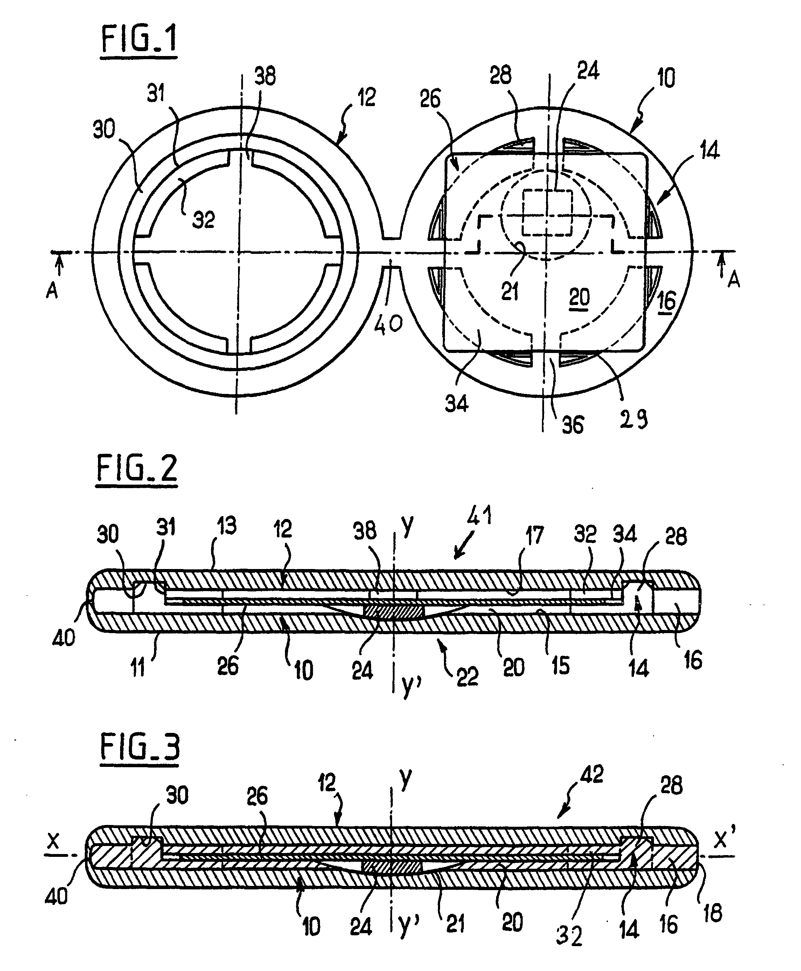

Les figures 1 à 3 concernent un premier mode de réalisation de jeton selon l'invention, plus particulièrement un jeton 42 de relative petite taille, d'environ 20 mm de diamètre et 2 mm d'épaisseur, destiné à être utilisé comme étiquette électronique.

Le jeton 42 comporte deux demi-disques 10 et 12 d'axe YY' solidarisés par un joint en matière plastique 18 injecté sur la tranche du jeton dans une zone annulaire périphérique 16 située entre les deux demi-disques 10 et 12. Dans le mode de réalisation ici décrit à titre d'exemple non limitatif, la zone annulaire périphérique se présente sensiblement sous la forme d'une gorge. Pour des raisons de respect des tolérances du jeton (notamment des tolérances concernant la planéité des faces du jeton définitif compte tenu du risque de déformation des faces externes 11 et 13 des demi-disques lors de l'injection du joint 18), les deux demi-disques 10 et 12 d'épaisseurs égales sont disposés symétriquement selon le plan de symétrie XX' du jeton 42 parallèle aux faces externes 11 et 13 et espacés par l'intermédiaire d'une projection axiale d'écartement (selon l'axe YY' perpendiculaire au jeton 42) constituée dans le cas présent par une couronne circulaire discontinue 14 prévue sur la face interne 15 du demi-disque 10 également appelé demi-disque support.

Comme illustré sur la figure 1 (demi-disque de droite), la couronne 14 (ci-après appelée couronne réceptacle) est coaxiale au demi-disque 10 et sépare la zone annulaire périphérique 16 d'une zone centrale interne 20 adaptée notamment pour recevoir un insert 22 constitué d'un circuit électronique à mémoire 24 et d'un émetteur-récepteur dont l'antenne périphérique est intégrée dans ou fixée à une plaquette support mince 26 de résine synthétique, par exemple à base de résine époxy chargée. Sans sortir du cadre de l'invention, la plaquette mince se présente sous la forme d'un film plastique rigide servant de support au circuit électronique et à l'antenne périphérique. La couronne 14 qui fait fonction de réceptacle pour l'insert 22 comporte une zone circulaire plane 34 surmontée d'une ceinture de saillies 28 en position extérieure et réparties circulairement. Lorsque l'insert 22 est mis en place dans la couronne réceptacle 14, la plaquette 26, de forme générale polyédrique par exemple de forme carrée, repose sur la zone circulaire plane 34 et se trouve encadrée et maintenue angulairement par les saillies 28. Comme représenté sur la figure 1, les sommets de la plaquette carrée 26 se projettent au travers de découpes élargie 29 réalisées dans la ceinture de saillies et débordent dans la zone annulaire 16, ce qui permet de réduire le diamètre du jeton et de rendre l'agencement du jeton très compact et très robuste après injection du joint. De même pour réduire l'épaisseur du jeton, un petit évidemment en forme de calotte sphérique 21 est pratiqué dans la zone centrale interne 20 dans la face interne 15 du demi-disque 10 pour loger le circuit électronique à mémoire 24.

D'une façon générale, le dispositif électronique à mémoire 24 comporte un circuit électronique incorporant une mémoire PROM portant des informations concernant le jeton et/ou la personne ou l'objet associée au jeton, par exemple un code d'identification fixe numérique ou alphanumérique de 64 bits (comportant un ou plusieurs champs tels que: le numéro de série, l'identification d'un produit, d'un lot ou d'un lieu, une valeur numérique associée au jeton, etc.), et un émetteur-récepteur à antenne périphérique adapté pour être alimenté par couplage inductif. Dans la pratique, l'émetteur-récepteur est susceptible d'échanger sans contact par ondes modulées des données avec un poste de lecture placé à distance (à titre d'exemple non limitatif entre 15 cm et 2 m), la fréquence de travail se situant entre 10 kHz et 20 MHz. Le dispositif électronique à mémoire permet par exemple de lutter contre les vols et/ou de faciliter la gestion et l'inventaire d'un lot d'objets dans une espace défini (aires de stockage, entrepôts, magasins). Bien entendu sans sortir du cadre de l'invention, le dispositif électronique à mémoire 24 de type non reprogrammable (lecture seule) peut être remplacé par un dispositif reprogrammable à code évolutif avec possibilité de lecture et écriture en mémoire.

Associé au demi-disque support 10 par une charnière 40, le demi-disque 12 ou demi-disque couvercle présente sur sa face interne 17 une gorge annulaire 30 (en l'occurrence continue) destinée à servir de logement aux saillies 28 légèrement biseautées à leurs sommets (voir figures 2 et 3) et une couronne de fermeture 32 (en l'occurrence discontinue) dont le flanc externe 31 vient, après "fermeture" ou rabat des deux demi-disques 10 et 12 l'un sur l'autre, en contact d'appui sur les bords internes latéraux des saillies 28 (voir la figure 2 montrant le jeton pré-assemblé 41 avant injection du joint 18), la plaquette 26 étant alors maintenue axialement entre la couronne de fermeture 32 et la zone circulaire plane 34 de la couronne réceptacle 14 du demi-disque support 10. Enfin, pour permettre à la matière injectée avec le joint 18 de pénétrer dans la zone centrale interne 20 et d'enrober quasiment complètement l'insert 22, les deux couronnes 14 et 32 présentent des créneaux traversants 36 et 38 pour faire communiquer la zone annulaire périphérique 16 avec la zone centrale interne 20.

Bien évidemment sans sortir du cadre de l'invention, le jeton 42 peut être obtenu directement en variante sans charnière à partir de demi-disques séparés (non représentés) semblables aux demi-disques 10,12 et moulés par injection de façon indépendante.

La fabrication du jeton 42 (avec charnière ou dans sa variante sans charnière) s'obtient par la réalisation des opérations suivantes:
- moulage par injection des deux demi-disques 10,12 séparés ou attachés par une charnière 40
- mise en place de l'insert 22 à circuit électronique avec collage éventuel et mise en place des deux demi-disques 10,12,
- fermeture des demi-disques 10,12,
- injection du joint 18,
- élimination éventuelle de la charnière 40 par tournage de la périphérie du jeton.

Il est à noter que la structure relativement simple et robuste du jeton 42 selon l'invention constituée par les deux demi-disques 10 et 12 et le joint 18 forme une coque de protection rigide et étanche pour le dispositif d'identification électronique 24, 26. Par ailleurs le recouvrement axial entre les saillies 28 de la couronne réceptacle 14 et la couronne de fermeture 32 permet de réduire l'épaisseur de jeton tout en augmentant la rigidité de l'ensemble. Enfin le centrage axial des demi-disques 10 et 12 (assuré par les saillies 28, la gorge 30 et l'épaulement 31 de la couronne 32) associé à la charnière mince 40 facilite l'emboîtage des deux demi-disques et de ce fait l'automatisation de cette opération dans la fabrication du jeton 42.

De façon préférentielle les deux demi-disques 10 et 12 attachés par leur charnière 40 sont obtenus en une seule opération de moulage par injection d'une matière plastique rigide. Les matières plastiques utilisées pour les demi-disques et le joint sont en général choisies parmi l'ensemble des groupes des thermoplastiques (à titre d'exemple non limitatif, polyoléfines, polyamides, polyesters saturés, polycarbonates, polyoxyméthylènes, polysulfures de phénylène, groupes des polymères styrèniques, vinyliques, acryliques ou fluorés, etc..) en fonction des applications prévues pour les jetons et des spécifications techniques qui en résultent, par exemple le coût de fabrication du jeton (matière/mise en oeuvre), la compatibilité électronique, la résistance aux chocs et à la chaleur, la résistance aux agressions chimiques, la bio-compatibilité, l'esthétique et le marquage du jeton, etc.. . Le cas échéant, les polymères de base sont chargés, par exemple pour augmenter le poids et/ou la rigidité du jeton ou pour sa coloration.

Dans le cas présent donné à titre d'exemple non limitatif, on utilise pour les demi-disques 10 et 12 et pour le joint 18 le même polymère de base, en l'occurrence le polypropylène retenu notamment pour son faible coût et pour assurer une bonne solidarisation et cohésion entre le joint et les demi-disques lors de l'injection finale (par effet de fusion partielle/soudage). Pour assurer une bonne rigidité aux demi-disques 10 et 12, le matériau utilisé pour les demi-disques 10 et 12 est un polypropylène chargé à environ 30% en poids de fibres de verre courtes, de préférence de l'ordre de 100 µm de longueur pour un diamètre de 10 µm. Sont également utilisés avec intérêt comme polymères de base le polyamide 6 (PA6) et le polysulfure de phénylène (PPS), la charge de fibres de verre pour les demi-disques étant généralement comprise entre 20% et 50% en poids.

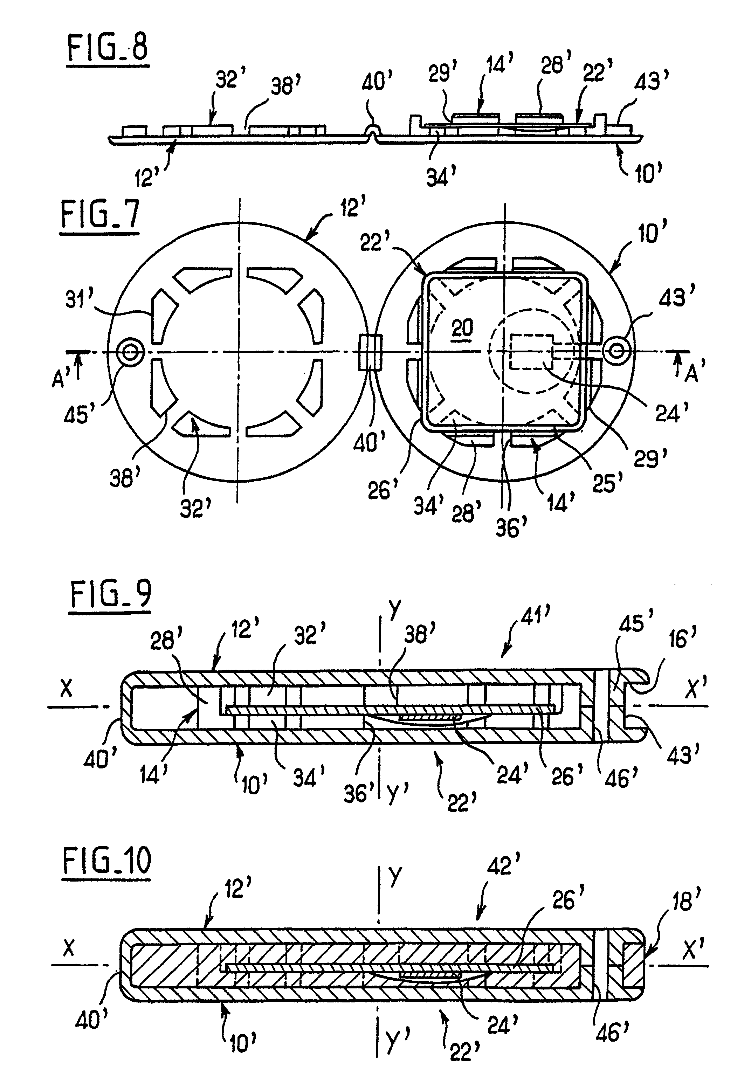

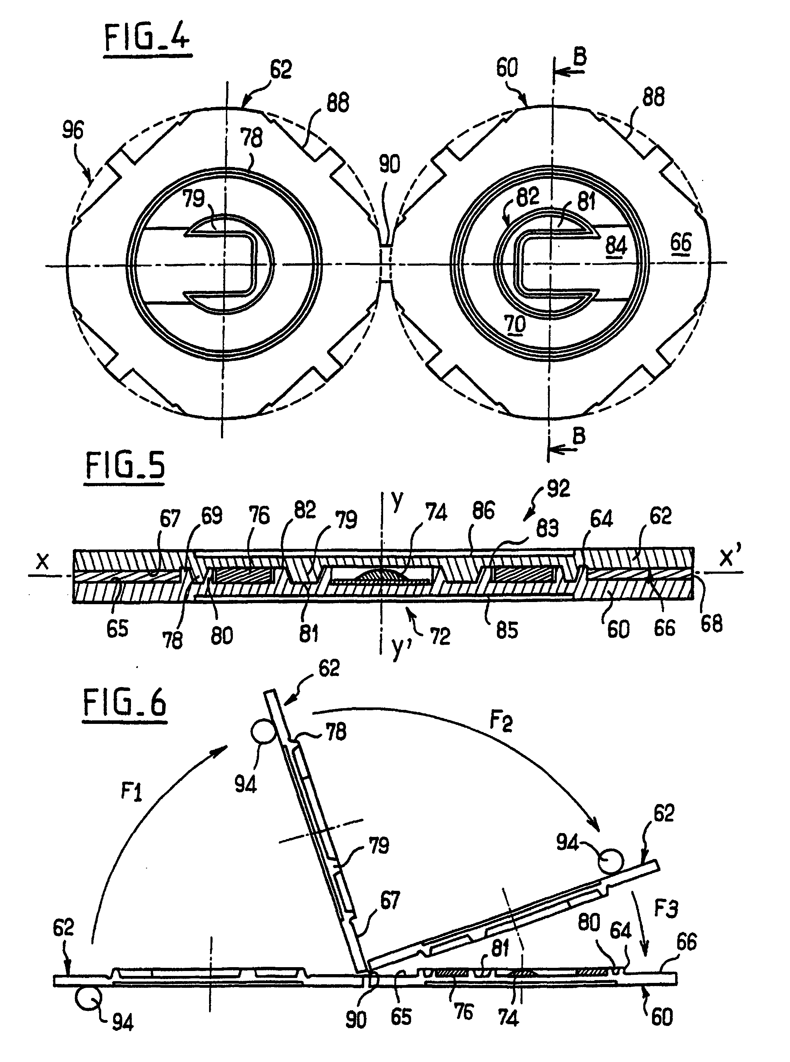

Dans le cas de jetons de jeu ou de casino, par exemple pour un jeton du type de ceux illustrés aux figures 4, 5, 6, 11 et 12 et décrits ci-après, l'esthétique et la faculté de coloration du jeton, la résistance aux chocs et aux agressions chimiques (lessivage) et la dureté de surface sont importantes. Les matières plastiques utilisées pour les jetons de jeu (demi-disques d'une part et joint d'autre part) peuvent être choisies parmi les suivantes: le polyméthacrylate de méthyle (PMMA), l'acrylonitrile-butadiène-styrène (ABS), le polyacétal et les copolymères d'acétal (POM), les polyamides et leurs copolymères, les polysulfures de phénylène (PPS), les poly(alkylènes térephtalate), notamment le polybutylène térephtalate (PBT); les polyuréthannes thermoplastiques (PUR), les polymères vinyliques, notamment le polychlorure de vinyle (PVC), les polyoléfines, notamment les polyéthylènes (PE) et les polypropylènes, ou parmi des couples de polymères susceptibles d'un bon soudage entre eux, de préférence ABS/PMMA, ABS/PBT, PA6/polyuréthanne thermoplastique, PA66/polyuréthanne thermoplastique, polycarbonate/PBT. Bien entendu les compositions peuvent varier notamment par des charges incorporées dans les matériaux utilisés pour les demi-disques et le joint de solidarisation: par exemple des charges pondérales (baryte, poudres métalliques, oxyde de zinc, etc.) et des charges en colorants (oxyde de zinc, etc.) pour réaliser le marquage de tranche et/ou la teinte du fond des faces externes du jeton (notamment les faces externes des demi-disques) destinées à recevoir des motifs de décoration par sublimation ou par tampographie, les demi-disques et les joints étant en général réalisés en matières plastiques de couleurs différentes.

Les figures 7 à 10 concernent un jeton 42' destiné à être utilisé comme étiquette électronique et représentant une variante du jeton 42 décrit en référence aux figures 1 à 3. De dimensions et de structures générales voisines, les jetons 42 et 42' présentent un grand nombre de caractéristiques techniques identiques ou similaires dont la description ne sera pas reprise en détails ci-après et qui portent les mêmes références numériques assorties du signe « ' ».

Le jeton 42' comporte deux demi-disques 10' et 12' d'axe YY' solidarisés par un joint en matière plastique 18' injecté sur la tranche du jeton dans une zone annulaire périphérique 16' située entre les deux demi-disques 10' et 12'. Les deux demi-disques 10' et 12' d'épaisseurs égales sont disposés symétriquement selon le plan de symétrie XX' du jeton 42' et espacés par l'intermédiaire d'une projection axiale d'écartement (selon l'axe YY' perpendiculaire au jeton 42') constituée par une couronne circulaire discontinue 14' prévue sur la face interne du demi-disque 10'(demi-disque support).

Comme illustré sur la figure 1 (demi-disque de droite), la couronne 14' (couronne réceptacle) est coaxiale au demi-disque 10' et sépare la zone annulaire périphérique 16' d'une zone centrale interne 20' recevant un insert 22' constitué d'un circuit électronique à mémoire 24' (identique ou similaire au circuit 24 décrit ci-avant) et d'un émetteur-récepteur dont l'antenne périphérique 25' est fixée comme le circuit 24' à une plaquette support mince 26' en matière plastique (par exemple un film plastique rigide). La couronne 14' faisant fonction de réceptacle pour l'insert 22' comporte une zone circulaire plane 34' discontinue surmontée d'une ceinture de saillies 28' en position extérieure et réparties circulairement. Lorsque l'insert 22' est en place dans la couronne réceptacle 14', la plaquette 26' de forme carrée repose sur la zone circulaire plane 34' et se trouve encadrée et maintenue angulairement par les saillies 28'. Comme représenté sur la figure 7, les sommets de la plaquette carrée 26' se projettent au travers de découpes élargies 29' réalisées dans la ceinture de saillies 28' et débordent dans la zone annulaire 16'; ceci permet de réduire le diamètre du jeton et de rendre l'agencement du jeton 42' très compact et très robuste après injection du joint 18'.

Associé au demi-disque support 10' par une charnière 40' le demi-disque couvercle 12' présente sur sa face interne une couronne de fermeture 32' discontinue dont le flanc externe 31', en l'espèce selon un contour externe carré, vient après "fermeture" ou rabat des deux demi-disques 10' et 12' l'un sur l'autre en contact sur les bords internes latéraux des saillies 28' disposées selon un contour interne carré complémentaire (voir la figure 9 montrant le jeton pré-assemblé 41' avant injection du joint 18'), la plaquette 26' (également carrée de dimension légèrement inférieure à celle du contour interne de la couronne 14') étant alors maintenue axialement entre la couronne de fermeture 32' et la zone circulaire plane discontinue 34' de la couronne réceptacle 14' du demi-disque support 10'. Enfin, pour permettre à la matière injectée avec le joint 18' de pénétrer dans la zone centrale interne 20' et d'enrober quasiment complètement l'insert 22' les deux couronnes 14' et 32' présentent des créneaux traversants 36' et 38' pour faire communiquer la zone annulaire périphérique 16' avec la zone centrale interne 20'. Pour faciliter la fixation de l'étiquette électronique constituée par le jeton 42', ce dernier comporte dans la zone annulaire 16', comme illustré sur les figures 7 à 10, un passage 46' parallèle à l'axe YY' obtenu par deux petits conduits cylindriques identiques 43' et 45' disposés bout à bout et venus de matière avec leurs demi-disques respectifs.

Les demi-disques 10' et 12' du jeton 42' attachés par leur charnière 40' (de type en dos d'âne illustré figure 8) sont obtenus par injection de matière plastique rigide. Bien entendu, les matériaux et/ou compositions de matériaux et/ou charges utilisés pour les jetons 42 décrits ci-avant sont applicables aux jetons 42'. Il en est de même pour le mode opératoire de fabrication des jetons 42 et 42' (avec ou sans charnière).

Les figures 4 à 6 concernent un autre mode de réalisation de jeton selon l'invention, plus particulièrement un jeton 92 de plus grande taille, d'environ 40 mm de diamètre et 4 mm d'épaisseur destiné à être utilisé comme jeton de casino. Ce jeton 92 présente certaines de similitudes avec les jetons 42 et 42' (par exemple au niveau du dispositif électronique à mémoire) et qui de ce fait ne seront pas reprises en détails ci-après.

Le jeton 92 comporte deux demi-disques 60 et 62 d'axe YY' solidarisés par un joint en matière plastique 68 injecté sur la tranche du jeton dans une zone annulaire périphérique 66 située entre les deux demi-disques 60 et 62. Dans le mode de réalisation ici décrit à titre d'exemple non limitatif, les deux demi-disques 60 et 62 d'épaisseurs égales sont disposés symétriquement selon le plan de symétrie XX' du jeton 92 parallèle aux faces externes des deux demi-disques et espacés par l'intermédiaire d'une projection axiale d'écartement (selon l'axe YY' perpendiculaire au jeton 92) constituée dans le cas présent par une couronne circulaire 64 (couronne réceptacle) prévue sur la face interne 65 du demi-disque 60 également appelé demi-disque support. La couronne 64 présente une zone d'appui plane 69 creusée d'une gorge annulaire 80 et destinée à recevoir une couronne de fermeture 78 correspondante réalisée sur la face interne 67 du demi-disque couvercle 62. Par ailleurs, sans sortir du cadre de l'invention la couronne d'écartement du demi-disque support peut être circulaire, continues ou discontinue, coaxiale au demi-disque mais également polyédrique, de préférence selon un polyèdre régulier, carré, hexagone, etc.. .

Comme illustré sur la figure 4 (demi-disque de droite), la couronne 64 (en l'occurrence continue) est coaxiale au demi-disque 62 et sépare la zone annulaire périphérique 66 d'une zone centrale interne 70. La face interne 65 du demi-disque 60 présente au centre de la zone interne 70 un bossage 82 en forme de C adapté notamment pour recevoir le circuit électronique à mémoire 74 de l'insert 72 et l'émetteur-récepteur dont l'antenne périphérique 76 est disposée autour du bossage 82 (voir figure 5). Le bossage 82 présente une zone d'appui plane 83 creusée d'une gorge en C 81 et destinée à recevoir une saillie 79 correspondante en C réalisée sur la face interne 67 du demi-disque couvercle 62. De façon générale les gorges 80 et 81 et les saillies correspondantes 78 et 79 ont des profils complémentaires, les gorges 80 et 81 présentant un profil à fond plat et à bords évasés pour faciliter l'emboîtage des demi-disques 60 et 62, les gorges 80 et 82 présentant de plus une profondeur sensiblement égale à la hauteur de la couronne réceptacle 64 assurant ainsi un recouvrement axial entre les deux couronnes. Par ailleurs pour maintenir les demi-disques 60 et 62 emboîtés pendant les manipulations et l'injection du joint 68, les demi-disques 60 et 62 sont collés au niveau de la gorge en C 81 de la saillie 79 à la colle cyano-acrylate ou analogue. De même le circuit électronique 74 et l'antenne périphérique 76 sont immobilisés et protégés par dépôt de colle époxy ou analogue dans la zone 70, un léger creusement 84 destiné à diriger la colle époxy autour du circuit 74 étant visible sur la figure 4 (la zone centrale interne 70 étant isolée de la gorge 81 pour éviter le mélange des colles).

D'une façon générale, les deux demi-disques 60, 62 sont à face pleine avec des faces externes planes, lisses ou granitées, ou sensiblement planes avec un creusement 85, 86 central de faible profondeur pour accueillir une étiquette de décoration ou un décor tampographié ou sublimé.

Par ailleurs, les faces externes des demi-disques des jetons selon l'invention peuvent être marquées lors de l'injection du joint de solidarisation par remplissage, avec la matière colorée du joint, de découpes appropriées dans les demi-disques (de couleur différente à celle du joint) et réalisées au travers de la paroi annulaire périphérique des demi-disques, les découpes représentant des motifs figuratifs divers ou l'inscription du nom du casino et/ou de la valeur du jeton.

Par exemple le jeton 92 représenté aux figures 4 et 5 comporte deux demi-disques 60 et 62 avec des découpes périphériques 88 au niveau de la bordure circulaire 96 du jeton (représentée en ligne à tirets) et en communication directe avec la zone annulaire périphérique 66. Lors de l'injection du joint 68 l'espace libre des découpes 88, est rempli par la matière colorée du joint, le cheminement de cette matière se faisant par écoulement entre les deux demi-disques 60 et 62. De préférence, les bords des découpes 88 sont biseautés et noyés dans la matière plastique du joint 68 pour assurer un verrouillage entre le joint 68 et les demi-disques 60 et 62. Les demi-disques 60 et 62 sont attachés par une charnière mince 90 et obtenus par une seule opération d'injection. Bien évidemment sans sortir du cadre de l'invention, le jeton 92 peut être obtenu en variante sans charnière à partir de demi-disques séparés moulés par injection de façon indépendante.

La fabrication du jeton 92 (avec ou sans charnière) s'obtient par la réalisation des opérations successives suivantes:
- moulage par injection des deux demi-disques 60 et 62 séparés ou attachés par leur charnière 90;
- mise à plat des demi-disques 60 et 62 et mise en place du circuit électronique 74 et de l'antenne 76;
- dépose de la colle époxy;
- dépose de la colle cyano-acrylate;
- fermeture des demi-disques 60 et 62 par mouvement du demi-disque couvercle 62 autour de la charnière 90;
- mise en place dans le moule d'injection finale et maintien en pression des demi-disques 60 et 62 et injection du joint 68 à partir d'un ou plusieurs orifices sur la tranche du jeton;
- éventuellement élimination de la charnière 90 par tournage de la périphérie du jeton suivi d'un polissage si nécessaire.

De façon générale les jetons de jeu pour casino, tels que les jetons 92, ne comportent pas de charnière, une fois terminés, et sont obtenus soit directement à partir de demi-disques séparés soit à partir de demi-disques attachés avec élimination de la charnière.

A titre d'exemple non limitatif, les jetons de jeu 92 ainsi obtenus se présentent sous la forme d'un disque d'environ 40 mm de diamètre et d'épaisseur comprise entre 3 et 4 mm avec une épaisseur de joint entre le tiers et le cinquième de celle du jeton.

La figure 6 montre, à titre d'exemple non limitatif, un schéma de principe de l'automatisation de la fermeture des demi-disques 60 et 62 par mouvement de rotation selon les flèches F1, F2 et F3 du demi-disque couvercle 62 autour de la charnière 90 à l'aide d'un galet 94 (représentés en 3 positions successives de la gauche [position à plat] vers la droite de la figure 6).

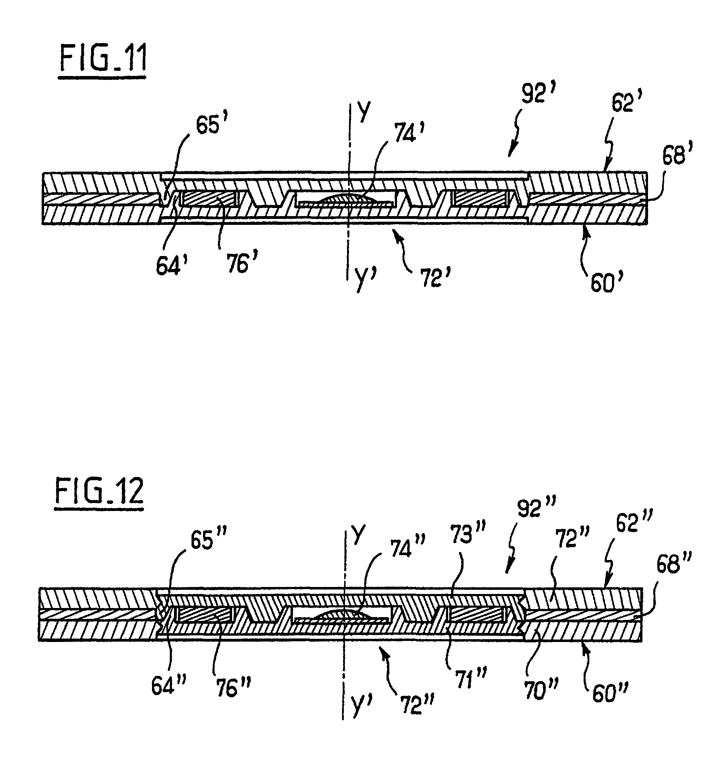

Le jeton de jeu 92' illustré à la figure 11 représente une variante du jeton 92 décrit ci-avant et présente un grand nombre de similitudes techniques avec ce jeton 92 (par exemple au niveau de l'insert et du dispositif électronique à mémoire associé 72, 74 et 76 renumérotés 72, 74' et 76' sur la figure 11) ; de ce fait les caractéristiques techniques communes aux jetons 92 et 92' ne seront pas décrites à nouveau.

La différence entre les jetons 92 et 92' se situe au niveau du contact de fermeture entre la couronne réceptacle 64' appartenant au disque support 60' et la couronne de fermeture 65' appartenant au demi-disque couvercle 62'. Plus précisément le demi-disque réceptacle 60' présente un profil externe conique sur lequel vient en appui le profil interne conique de la couronne de fermeture 65', les deux couronnes 64', 65' présentant de plus des hauteurs sensiblement égales à l'épaisseur du joint 68' pour assurer un bon recouvrement axial entre des deux couronnes et un emboîtage facilité entre les deux demi-disques 60' et 62' attachés par leur charnière (non représentée).

Bien entendu les deux types de fermetures décrites pour les jetons de jeu 92 et 92' à demi-disques monoblocs sont applicables aux jetons de jeu à demi-disques composites dans lesquels chaque demi-disque comporte une partie centrale comprenant la couronne correspondante et obtenue en matière plastique alourdie par des charges densifiantes (par exemples charges métalliques et/ou minérales) et une partie annulaire en regard de la zone annulaire périphérique recevant le joint de solidarisation. A titre d'exemple non limitatif, la figure 12 montre un jeton de jeu 92'' techniquement très proche du jeton 92' (avec emboîtage conique des couronnes 64'' et 65'') mais réalisé à partir de demi-disques composites, le demi-disque réceptacle 60'' comportant une partie centrale 71'' en matériau alourdi portant la couronne à bord externe conique 64'' et ceinturée d'une partie annulaire 70'' et le demi-disque couvercle 62'' comportant une partie centrale 73'' en matériau alourdi portant la couronne à bord interne conique 65'' et ceinturée d'une partie annulaire 72''.

Il est à noter que si la présence d'une charnière d'attache entre les demi-disques (par exemple les charnières 40 et 90 pour les jetons 42 et 92) est intéressante en particulier pour l'automatisation de la fabrication des jetons, cette charnière n'est toutefois qu'une option et que l'invention couvre également des jetons réalisés à partir de demi-disques obtenus de façon indépendante, notamment des demi-disques conformes aux demi-disques 10,12,60,62 et obtenus par injections séparées.

## Revendications

1. Jeton en forme générale de disque, ou dispositif analogue de forme plate, comportant deux demi-disques (10,12,60,62) solidarisés l'un à l'autre, les deux demi-disques en matière plastique étant espacés par l'intermédiaire d'une projection axiale d'écartement prévue sur la face interne d'un des demi-disques ou demi-disque support (10,60) de façon à définir entre les deux demi-disques une zone annulaire périphérique (16,66) débouchant sur la tranche du jeton, et un joint de solidarisation (18,68) en matière plastique déposé par injection dans ladite zone annulaire périphérique (16,66), ladite projection axiale d'écartement, de hauteur sensiblement égale à celle de ladite zone annulaire périphérique, se présentant sous la forme d'une couronne réceptacle (14,64) définissant une zone centrale interne (20,70) dans le jeton pour servir de réceptacle à un insert (22,72) se présentant sous la forme d'un dispositif électronique comportant un circuit électronique (24,74) incorporant une mémoire portant des informations d'identification ou de codage et un émetteur-récepteur à antenne périphérique (25',76), **caractérisé en ce que** l'autre demi-disque ou demi-disque couvercle (12,62) comporte une couronne de fermeture (32,78) continue ou discontinue venant en appui sur la couronne réceptacle (14,64) avec un recouvrement axial.

2. Jeton selon la revendication 1, **caractérisé en ce que** ladite couronne réceptacle (14) comporte une zone circulaire plane (34) surmontée d'une ceinture de saillies (28) en position extérieure réparties circulairement et destinées à maintenir en place l'insert (22) et à recevoir ladite couronne de fermeture (32).

3. Jeton selon la revendication 2, **caractérisé en ce que** ledit insert (22) avec son antenne se présente sous la forme générale d'une pastille ou plaquette mince (26) et en ce ladite couronne de fermeture (32) présente un flanc externe (31) venant en contact latéral sur lesdites saillies (28) de la couronne réceptacle (14), ladite plaquette (26) étant après montage maintenue axialement entre la couronne de fermeture (32) et la zone circulaire plane (34) de la couronne réceptacle (14).

4. Jeton selon la revendication 3, **caractérisé en ce que** ladite plaquette (26) présente une forme polygonale, de préférence carrée ou rectangulaire et **en ce que** ladite ceinture de saillies (28) présente des découpes élargies (29) pour permettre aux sommets de ladite plaquette (26) de se projeter dans ladite zone annulaire périphérique (16).

5. Jeton selon l'une des revendications 3 et 4, **caractérisé en ce que** le contour interne de ladite ceinture de saillies (28') et le contour externe de la couronne de fermeture (32') présentent des formes polygonales complémentaires, de préférence carrée ou rectangulaire.

6. Jeton selon l'une des revendications 3 et 4, **caractérisé en ce que** le contour externe de la couronne de fermeture (32) est circulaire et **en ce que** les sommets des saillies (28) de la couronne réceptacle se projettent dans une gorge annulaire (30) de faible profondeur réalisée dans ledit demi-disque couvercle (12).

7. Jeton selon l'une des revendications 1 à 6, **caractérisé en ce qu'**au moins une des deux couronnes (14,32) des demi-disques (10,12) présente des créneaux (36,38) ou des canaux traversants pour faire communiquer la zone annulaire périphérique (16) avec la zone centrale interne (20) et faciliter le remplissage de ladite zone centrale interne par de la matière injectée lors de l'injection du joint (18).

8. Jeton selon la revendication 1, **caractérisé en ce que** la couronne réceptacle (64) comporte une zone sensiblement circulaire d'appui plane (69) creusée axialement d'une gorge annulaire circulaire (80) destinée à recevoir une couronne de fermeture (78) circulaire à profil complémentaire à ladite gorge (80).

9. Jeton selon la revendication 8, **caractérisé en ce que** ladite gorge (80), de profil à fond plat et à bords évasés, présente une profondeur sensiblement égale à la hauteur de ladite couronne réceptacle (64).

10. Jeton selon la revendication 1, **caractérisé en ce que** la couronne réceptacle (64',64'') présente un profil externe conique complémentaire au profil interne conique de la couronne de fermeture (65',65''), les deux couronnes (64'-65', 64''-65'') présentant de plus des hauteurs sensiblement égales pour assurer un recouvrement axial entre les deux couronnes au moins égal à la hauteur de ladite zone annulaire périphérique.

11. Jeton selon la revendication 1, **caractérisé en ce que** le disque réceptacle (60') présente un profil externe conique sur lequel vient en appui le profil interne conique de la couronne de fermeture (65'), les deux couronnes (64',65') présentant de plus des hauteurs sensiblement égales à l'épaisseur du joint de solidarisation (68').

12. Jeton selon l'une des revendications 8 à 11, **caractérisé en ce que** la face interne du demi-disque support (60) porte au centre de la zone centrale interne (70) un bossage (82) en forme de C destiné à recevoir ledit circuit électronique (74) et présentant une zone d'appui plane creusée d'une gorge en C (81) destinée à recevoir une saillie correspondante en C (79) réalisée sur la face interne du demi-disque couvercle (62).

13. Jeton selon la revendication 12, **caractérisé en ce que** ladite gorge en C (81) et ladite saillie en C (79) ont des profils complémentaires, ladite gorge en C (79) présentant un profil à fond plat et à bords évasés.

14. Jeton selon l'une des revendications 12 et 13, **caractérisé en ce que** deux demi-disques (60, 62) sont collés au niveau de ladite gorge en C (81) et de la saillie correspondante (79) à la colle cyano-acrylate ou analogue.

15. Jeton selon l'une des revendications 8 à 14, **caractérisé en ce que** ledit insert (22) à circuit électronique est maintenu en position dans la zone centrale interne (70) par de la colle époxy ou analogue.

16. Jeton selon l'une des revendications précédentes, **caractérisé en ce que** les matières plastiques utilisées pour le joint d'une part et pour les deux demi-disques d'autre part sont choisies identiques ou non et sont obtenues à partir d'un polymère de base choisi parmi les suivants:
- le polyméthacrylate de méthyle (PMMA);
- l'acrylonitrile-butadiène-styrène (ABS);
- les polyamides et leurs copolymères;
- le polyacétal et les copolymères d'acétal (POM);
- le polysulfure de phénylène (PPS)
- les poly(alkylènes térephtalate), notamment le polybutylène térephtalate (PBT);
- les polyuréthannes thermoplastiques (PUR);
- les polymères vinyliques, polychlorure de vinyle (PVC);
- les polyoléfines, notamment les polyéthylènes (PE) et les polypropylènes.

17. Jeton selon l'une des revendications 1 à 15, **caractérisé en ce que** les matières plastiques utilisées pour le joint (18) d'une part et pour les deux demi-disques (10, 12) d'autre part sont obtenues à partir d'un même polymère de base choisi parmi le polypropylène, le polyamide 6 (PA6) et le polysulfure de phénylène (PPS), le matériau polymère de base utilisé pour les demi-disques (10, 12) étant chargé à environ 30% en poids de fibres de verre courtes, de préférence de longueur de l'ordre de 100 pm pour un diamètre de 10 µm.

18. Jeton selon l'une des revendications 10 à 15, **caractérisé en ce qu'**il comporte deux demi-disques composites en matières plastiques, le demi-disque réceptacle (60'') comportant une partie centrale (71'') réalisée en matière plastique alourdie par des charges densifiantes, portant la couronne réceptacle (64'') et ceinturée d'une partie annulaire (70'') et le demi-disque couvercle (62'') comportant une partie centrale (73'') réalisée en matière plastique alourdie par des charges densifiantes, portant la couronne de fermeture (65'') et ceinturée d'une partie annulaire (72'').

19. Jeton l'une des revendications 1 à 17, **caractérisé en ce que** les deux demi-disques (10,12,60,62) sont moulés par injection attachés l'un à l'autre en périphérie par une charnière (40,90), ladite charnière (40,90) étant éventuellement éliminée après injection du joint (18, 68).

20. Procédé de fabrication d'un jeton selon l'une des revendications précédentes caractérisé en qu'il comporte les opérations suivantes:
- moulage par injection des deux demi-disques (10,12, 60,62) séparés ou attachés par une charnière (40, 90),
- mise en place de l'insert (22,72) à circuit électronique avec collage éventuel et mise en place des deux demi-disques,
- fermeture des demi-disques (10,12, 60,62),
- injection du joint (18,68),
- élimination éventuelle de la charnière (40, 90) par tournage de la périphérie du jeton.

## Claims

1. Token in the general form of a disk, or similar device of flat shape, comprising two half-disks (10, 12, 60, 62) fastened to each other, the two half-disks, made of plastic, being spaced apart by means of an axial spacing projection provided on the internal face of one of the half-disks or base half-disk (10, 60) so as to define, between the two half-disks, a peripheral annular region (16, 66) emerging at the edge of the token, and a plastic jointing material (18, 68) deposited by injection into said peripheral annular region (16, 66), said axial spacing projection, of height approximately equal to that of said peripheral annular region, being in the form of a receptacle ring (14,64) defining an internal central region (20, 70) in the token for serving as a receptacle for an insert (22, 72) in the form of an electronic device comprising an electronic circuit (24, 74) incorporating a memory containing identification or coding information and a transmitter-receiver having a peripheral antenna (25', 76), **characterized in that** the other half-disk or cover half-disk (12, 62) includes a closure ring (32, 78) which bears on the receptacle ring (14, 64) with an axial overlap.

2. Token according to Claim 1, **characterized in that** said receptacle ring (14) includes a plane circular region (34) surmounted by a band of protuberances (28) in external position, these protuberances being distributed in a circular fashion and intended to hold the insert (22) in place and to house said closure ring (32).

3. Token according to Claim 2, **characterized in that** said insert (22) with its antenna has the general shape of a thin tablet or wafer (26) and **in that** said closure ring (32) has an external side wall (31) which comes into lateral contact with said protuberances (28) of the receptacle ring (14), said wafer (26), after it has been mounted, being held axially between the closure ring (32) and the plane circular region (34) of the receptacle ring (14).

4. Token according to Claim 3, **characterized in that** said wafer (26) has a polygonal, preferably square or rectangular, shape and **in that** said band of protuberances (28) has widened cuts (29) in order to allow the tops of said wafer (26) to project into said peripheral annular region (16).

5. Token according to either of Claims 3 and 4, **characterized in that** the internal profile of said band of protuberances (28') and the external profile of the closure ring (32') have complementary polygonal, preferably square or rectangular, shapes.

6. Token according to either of Claims 3 and 4, **characterized in that** the external profile of the closure ring (32) is circular and **in that** the tops of the protuberances (28) of the receptacle ring project into a shallow annular groove (30) made in said cover half-disk (12).

7. Token according to one of Claims 1 to 6,
**characterized in that** at least one of the two rings (14, 32) of the half-disks (10, 12) has through-slots (36, 38) or through-channels for making the peripheral annular region (16) communicate with the internal central region (20) and for making it easier for said internal central region to be filled with injected material when injecting the jointing material (18).

8. Token according to Claim 1, **characterized in that** the receptacle ring (64) includes an approximately circular plane bearing region (69) axially recessed by a circular annular groove (80) intended to house a circular closure ring (78) having a profile that is complementary to said groove (80).

9. Token according to Claim 8, **characterized in that** said groove (80), having a profile with a flat bottom and with flared edges, has a depth approximately equal to the height of said receptacle ring (64).

10. Token according to claim 1, **characterized in that** the receptacle ring (64', 64") has a conical external profile that is complementary to the conical internal profile of the closure ring (65', 65"), the two rings (64'-65', 64"-65") also having approximately equal heights in order to ensure an axial overlap, between the two rings, at least equal to the height of said peripheral annular region.

11. Token according to claim 1, **characterized in that** the receptacle disk (60') has a conical external profile on which bears the conical internal profile of the closure ring (65', 65"), the two rings (64'-65', 64"-65") also having heights approximately equal to the thickness of the jointing material (68').

12. Token according to one of Claims 8 to 11, **characterized in that** the internal face of the base half-disk (60) has, at the center of the internal central region (70), a C-shaped boss (82) intended to house said electronic circuit (74) and having a plane bearing region recessed by a C-shaped groove (81) intended to house a corresponding C-shaped protuberance (79) made on the internal face of the cover half-disk (62).

13. Token according to Claim 12, **characterized in that** said C-shaped groove (81) and said C-shaped protuberance (79) have complementary profiles, said C-shaped groove (79) having a profile with a flat bottom and with flared edges.

14. Token according to either of claims 12 and 13, **characterized in that** two half-disks (60, 62) are adhesively bonded in said C-shaped groove (81) and on the corresponding protuberance (79) with a cyanoacrylate or similar adhesive.

15. Token according to one of Claims 8 to 14, **characterized in that** said insert (22) with an electronic circuit is held in position in the internal central region (70) by an epoxy or similar adhesive.

16. Token according to one of the preceding claims, **characterized in that** the plastics used for the jointing material, on the one hand, and for the two half-disks, on the other hand, are chosen to be identical or different and are obtained from a base polymer chosen from the following:
- polymethyl methacrylate (PMMA);
- acrylonitrile-butadiene-styrene (ABS);
- polyamides and their copolymers;
- polyacetal and acetal copolymers (POM);
- polyphenylene sulfide (PPS);
- polyalkylene terephthalates, especially polybutylene terephthalate (PBT);
- thermoplastic polyurethanes (PUR);
- vinyl polymers, polyvinyl chloride (PVC);
- polyolefins, especially polyethylenes (PE) and polypropylenes.

17. Token according to one of claims 1 to 15, **characterized in that** the plastics used for the jointing material (18), on the one hand, and for the two half-disks (10, 12), on the other hand, are obtained from the same base polymer chosen from polypropylene, nylon-6 (PA6) and polyphenylene sulfide (PPS), the base polymer material used for the half-disks (10, 12) being filled with about 30% by weight of short glass fibers, preferably fibers with a length of the order of 100 µm for a diameter of 10 µm.

18. Token according to one of claim 10 to 15, **characterized in that** it includes two composite half-disks made of plastic materials, the receptacle half-disk (60") including a central part (71") made of plastic material weighted by densifying fillers carrying the receptacle ring (64") and being surrounded by an annular part (70") and the cover half-disk (62") including a central part (73") made of plastic material weighted by densifying fillers, carrying the closure ring (65") and surrounded by an annular part (72").

19. Token according to one of the preceding claims, **characterized in that** the two half-disks (10, 12, 60, 62) are injection-molded attached to each other around the periphery by a hinge (40, 90), said hinge (40, 90) optionally being removed after the jointing material (18, 68) has been injected.

20. Process for manufacturing a token according to one of the preceding claims, **characterized in that** it includes the following operations:
- injection molding of the two half-disks (10, 12, 60, 62), these being separate or attached by a hinge (40, 90);
- fitting of the insert (22, 72) having an electronic circuit, optionally with adhesive bonding, and fitting of the two half-disks;
- closure of the half-disks (10, 12, 60, 62);
- injection of the jointing material (18, 68);
- optional removal of the hinge (40, 90) by machining the periphery of the token.

## Patentansprüche

1. Jeton in der allgemeinen Form einer Scheibe oder entsprechende Vorrichtung flacher Form, mit zwei Scheibenhälften (10, 12, 60, 62), die fest miteinander verbunden sind, wobei die beiden Scheibenhälften aus Kunststoff durch einen axialen Abstandsvorsprung zueinander beabstandet sind, der auf der Innenfläche einer der Scheibenhälften bzw. der Trägerscheibenhälfte (10, 60) vorgesehen ist, derart, dass zwischen den beiden Scheibenhälften ein peripherer ringförmiger Bereich (16, 66) definiert wird, der in den Rand des Jetons mündet, und einer Verbindung (18, 68) aus Kunststoff, der durch Spritzgießen in den peripheren ringförmigen Bereich (16, 66) eingebracht ist, wobei der axiale Abstandsvorsprung einer Höhe, die im wesentlichen gleich der des peripheren ringförmigen Bereiches ist, die Form eines Aufnahmekranzes (14, 64) hat, der einen inneren zentralen Bereich (20, 70) im Jeton definiert, um als Aufnahme für einen Einsatz (22, 72) in Form einer elektronischen Vorrichtung zu dienen, welche eine elektronische Schaltung (24, 74) mit einem Speicher, welcher Identifikations- oder Kodierinformationen trägt, und einen Sender-Empfänger mit einer peripheren Antenne (25', 76) aufweist, **dadurch gekennzeichnet, dass** die andere Scheibenhälfte bzw. Deckelscheibenhälfte (12, 62) einen kontinuierlichen oder diskontinuierlichen Verschlusskranz (32, 78) aufweist, der an dem Aufnahmekranz (14, 64) mit axialer Überlappung anliegt.

2. Jeton nach Anspruch 1, **dadurch gekennzeichnet, dass** der Aufnahmekranz (14) einen ebenen kreisförmigen Bereich (34) aufweist, der außen von einem Ring aus Vorsprüngen (28) umgeben ist, die kreisförmig verteilt sind und dazu dienen, den Einsatz (22) in seiner Lage zu halten und den Verschlusskranz (32) aufzunehmen.

3. Jeton nach Anspruch 2, **dadurch gekennzeichnet, dass** der Einsatz (22) mit seiner Antenne die allgemeine Form einer Pille oder eines dünnen Plättchens (26) hat und dass der Verschlusskranz (32) eine Außenflanke (31) hat, die seitlich an den Vorsprüngen (28) des Aufnahmekranzes (14) anliegt, wobei das Plättchen (26) nach der Montage axial zwischen dem Verschlusskranz (32) und dem ebenen kreisförmigen Bereich (34) des Aufnahmekranzes (14) gehalten wird.

4. Jeton nach Anspruch 3, **dadurch gekennzeichnet, dass** das Plättchen (26) eine polygonale Form, vorzugsweise quadratische oder rechteckige Form hat und dass der Ring aus Vorsprüngen (28) verbreiterte Einschnitte (29) hat, um zu ermöglichen, dass Spitzen des Plättchens (26) in den peripheren ringförmigen Bereich (16) vorstehen.

5. Jeton nach einem der Ansprüche 3 und 4, **dadurch gekennzeichnet, dass** die Innenkontur des Ringes aus Vorsprüngen (28') und die Außenkontur des Verschlusskranzes (32') komplementäre polygonale Formen, insbesondere quadratische oder rechteckige Formen haben.

6. Jeton nach einem der Ansprüche 3 und 4, **dadurch gekennzeichnet, dass** die Außenkontur des Verschlusskranzes (32) kreisförmig ist und dass die Spitzen der Vorsprünge (28) des Aufnahmekranzes in eine Ringnut (30) geringer Tiefe vorstehen, die in der Deckelscheibenhälfte (12) gebildet ist.

7. Jeton nach einem der Ansprüche 1 bis 6, **dadurch gekennzeichnet, dass** mindestens einer der Kränze (14, 32) der Scheibenhälften (10, 12) Durchbrüche (36, 38) oder querverlaufende Kanäle haben, um den peripheren ringförmigen Bereich (16) mit dem inneren zentralen Bereich (20) zu verbinden und das, Auffüllen des inneren zentralen Bereiches mit eingespritztem Material beim Spritzgießen der Verbindung (18) zu erleichtern.

8. Jeton nach Anspruch 1, **dadurch gekennzeichnet, dass** der Aufnahmekranz (64) einen im wesentlichen kreisförmigen ebenen Anlagebereich (69) hat, in den axial eine kreisringförmige Nut (80) eingearbeitet ist, die zur Aufnahme eines kreisförmigen Verschlusskranzes (78) mit einem zur Nut (80) komplementären Profil dient.

9. Jeton nach Anspruch 8, **dadurch gekennzeichnet, dass** die Nut (80), die ein Profil mit ebenem Boden und aufgeweiteten Rändern hat, eine Tiefe hat, die im wesentlichen gleich der Höhe des Aufhahmekranzes (64) ist.

10. Jeton nach Anspruch 1, **dadurch gekennzeichnet, dass** der Aufnahmekranz (64, 64") ein konisches Außenprofil hat, das komplementär zu dem konischen Innenprofil des Verschlusskranzes (65, 65") ist, wobei die beiden Kränze (64'- 65', 64"-65") ferner im wesentlichen gleiche Höhe haben, um eine axiale Überdeckung zwischen den beiden Kränzen sicherzustellen, die mindestens gleich der Höhe des peripheren ringförmigen Bereiches ist.

11. Jeton nach Anspruch 1, **dadurch gekennzeichnet, dass** die Aufnahmescheibe (60') ein konisches Außenprofil hat, an dem das konische Innenprofil des Verschlusskranzes (65') anliegt, wobei die beiden Kränze (64', 65') ferner Höhen haben, die im wesentlichen gleich der Dicke der Verbindung (68') sind.

12. Jeton nach einem der Ansprüche 8 bis 11, **dadurch gekennzeichnet, dass** die Innenfläche der Trägerscheibenhälfte (60) in der Mitte des inneren zentralen Bereiches (70) eine C-förmige Ausbuchtung (82) aufweist, die zur Aufnahme der elektronischen Schaltung (74) dient und einen ebenen Anlagebereich aufweist, der mit einer C-förmigen Nut (81) versehen ist, welche zur Aufnahme eines entsprechenden C-förmigen Vorsprungs (79) an der Innenfläche der Deckelscheibenhälfte (62) dient.

13. Jeton nach Anspruch 12, **dadurch gekennzeichnet, dass** die C-förmige Nut (81) und der C-förmige Vorsprung (79) komplementäre Profile haben, wobei die C-formige Nut (79) ein Profil mit ebenem Boden und aufgeweiteten Rändern hat.

14. Jeton nach einem der Ansprüche 12 und 13, **dadurch gekennzeichnet, dass** die Scheibenhälften (60, 62) im Bereich der C-förmigen Nut (81) und des entsprechenden Vorsprungs (79) mit einem Cyanoacrylat-Kleber oder dergleichen verklebt sind.

15. Jeton nach einem der Ansprüche 8 bis 14, **dadurch gekennzeichnet, dass** der Einsatz (22) mit der elektronischen Schaltung in dem inneren zentralen Bereich (70) durch einen Epoxidkleber oder dergleichen in seiner Lage gehalten wird.

16. Jeton nach einem der vorhergehenden Ansprüche, **dadurch gekennzeichnet, dass** die Kunststoffe, die für die Verbindung einerseits und für die Scheibenhälften andererseits verwendet werden, identisch oder nicht identisch sind und ausgehend von einem Basispolymeren erhalten werden, das unter den folgenden ausgewählt wird:
- Polymethylmethacrylat (PMMA);
- Acrylonitril-Butadien-Styrol (ABS);
- Polyamid und seine Copolymeren;
- Polyacetal und die Copolymeren von Acetal (POM);
- Polyphenylsulfid (PPS);
- Poly(alkylen-terephthalat), insbesonderee Polybutylenterephthalat (PBT);
- thermoplastische Polyurethane (PUR);
- Polymeren von Vinyl, Polyvinylchlorid (PVC);
- Polyolefine, insbesondere Polyethylen (PE) und Polypropylen.

17. Jeton nach einem der Ansprüche 1 bis 15, **dadurch gekennzeichnet, dass** die Kunststoffe, die für die Verbindung (18) einerseits und die Scheibenhälften (10, 12) andererseits verwendet werden, ausgehend von demselben Basispolymeren erhalten werden, das unter Polypropylen, Polyamid 6 (PA 6) und Polyvinylsulfid (PPS) ausgewählt wird, wobei das für die Scheibenhälften (10, 12) verwendete Basispolymerenmaterial mit ungefähr 30 Gewichtsprozent kurzer Glasfasern, vorzugsweise einer Länge in der Größenordnung von 100 µm für einen Durchmesser von 10 µm, verstärkt wird.

18. Jeton nach einem der Ansprüche 10 bis 15, **dadurch gekennzeichnet, dass** er zwei aus Kunststoffen zusammengesetzte Scheibenhälften aufweist, wobei die Trägerscheibenhälfte (60") einen zentralen Abschnitt (71") aus einem durch Verdichtungsfüller verstärkten Kunststoff aufweist, der den Aufnahmekranz (64") trägt und von einem ringförmigen Abschnitt (70") umgeben ist, und die Deckelscheibenhälfte (62") einen zentralen Abschnitt (73") aus einem durch Verdichtungsfüller verstärkten Kunststoff aufweist, der den Verschlusskranz (65") trägt und von einem ringförmigen Abschnitt (72") umgeben wird.

19. Jeton nach einem der Ansprüche 1 bis 17, **dadurch gekennzeichnet dass** die beiden Scheibenhälften (10, 12, 60, 62) durch Spritzgießen hergestellt und am Umfang miteinander durch ein Gelenk (40, 90) befestigt sind, wobei das Gelenk (40, 90) nach dem Spritzgießen der Verbindung (18, 68) gegebenenfalls entfernt wird.

20. Verfahren zum Herstellen eines Jetons nach einem der vorhergehenden Ansprüche, **dadurch gekennzeichnet, dass** es die folgenden Schritte aufweist:
- Spritzgießen der beiden Scheidenhälften (10, 12, 60, 62), die getrennt oder durch ein Gelenk (40, 90) verbunden sind,
- Positionieren des Einsatzes (22, 72) mit der elektronischen Schaltung, durch eventuelles Kleben und Positionieren der beiden Scheibenhälften,
- Verschließen der Scheibenhälften (10, 12, 60, 62),
- Einspritzen der Verbindung (18, 68),
- eventuelles Entfernen des Gelenkes (40, 90) durch Drehen des Umfangs des Jetons.
